Europäisches Patentamt

**European Patent Office**

Office européen des brevets

(19)

(11) Publication number: **0 186 685**
**B1**

(12) **EUROPEAN PATENT SPECIFICATION**

(45) Date of publication of patent specification: **02.11.88**

(21) Application number: **85902811.0**

(22) Date of filing: **16.05.85**

(86) International application number:
**PCT/US85/00898**

(87) International publication number:
**WO 85/05579 19.12.85 Gazette 85/27**

(51) Int. Cl.⁴: **B 21 L 9/06, B 60 S 1/62,
B 62 D 55/00, B 23 P 11/00,
B 23 P 17/00**

(54) TRACK JOINT AND METHOD OF ASSEMBLING SAME.

(30) Priority: **31.05.84 US 615629**

(43) Date of publication of application:
**09.07.86 Bulletin 86/28**

(45) Publication of the grant of the patent:
**02.11.88 Bulletin 88/44**

(84) Designated Contracting States:
**DE FR GB IT**

(56) References cited:
FR-A-1 327 102
FR-A-1 531 952
GB-A-2 083 163
US-A-3 097 477
US-A-3 191 264
US-A-3 683 476
US-A-3 975 028
US-A-4 208 472
US-A-4 223 963
US-A-4 246 689
US-A-4 309 474
US-A-4 311 346

(73) Proprietor: **CATERPILLAR INC.**
**100 Northeast Adams Street**
**Peoria Illinois 61629-6490 (US)**

(72) Inventor: **LIVESAY, Richard, E.**
**1011 West Deerbrook Drive**
**Peoria, IL 61615 (US)**
Inventor: **GRAWEY, Charles, E.**
**210 E. Orchard Place**
**Peoria, IL 61603 (US)**

(74) Representative: **Jackson, Peter Arthur et al**
**GILL JENNINGS & EVERY 53-64 Chancery Lane**
**London WC2A 1HN (GB)**

Courier Press, Leamington Spa, England.

## Description

This invention relates generally to endless track chains for track-laying vehicles and, more particularly, to the pivot joints of such track chains.

Endless track chains are used to support and propel track-laying vehicles and are subjected to severe loads and an adverse environment in such use. Such track chains are constructed from a plurality of articulately coupled link sections, each having a pair of links, a pin, and a bushing. The pin of each link section is pivotally mounted through the bushing of the preceding link section so as to provide a hinge or pivot joint between each of the adjoining sections of the chain. Because of the adverse, highly abrasive environment in which track chain operates, it is highly advantageous to minimize internal wear by sealing and lubricating such hinge joints. The seals used to seal such joints are typically annular face type seals which are mounted within a seal cavity defined by a counterbore in the pin ends of the links, the adjoining end face of the bushing, and a thrust ring. One function of the thrust ring is to act as a spacer for limiting the inward movement of the pin links as they are pressed onto the ends of the pin during assembly. During such assembly, the links are pressed onto the pins until they are solid against the thrust rings which, in turn, are solid against the opposite ends of the bushing. This produces a tight joint, or a joint with no axial gaps between the assembled components of the joint. Those skilled in track art will appreciate that very large capacity hydraulic presses, presses of up to 300 ton capacity, are used to assemble the links onto their respective pins and bushings, the press fit connection therebetween being the principle means for retaining the track components together during operation.

Because of the high press forces used to assemble the track for retention purposes, there has been a tendency for the joints to become locked-up during the assembly process due to a retention in the joint of a compressive assembly load after the assembly is completed. The residual compressive load acting on the mating thrust surfaces of the joint may be of a sufficient magnitude to cause galling of such thrust surfaces and to generate sufficient frictional heat during the initial operation of the track joint to injure and even melt portions of the joint seals. Such damage to the track joint may lead to premature seal failure, loss of lubricant, and other deleterious affects, resulting in increased operating costs and downtime.

FR—A—1327102 discloses the use of a paper wrapping for packaging a track joint seal prior to and during assembly, the wrapping being worn away in use, allowing the seal to expand. No running clearance is provided by the wrapping.

US—A—3097477 discloses the production of a running clearance between a track joint bushing and links by controlling the extent to which the links are force fitted onto the ends of the pin but the clearance depends entirely on the tolerances in the dimensions of the parts and will be uncertain.

In accordance with the invention, a method of providing a controlled running clearance between opposing thrust surfaces of a track joint, the joint having a first member pivotable relative to a second member thereof, comprises the steps of applying a controlled interstice-producing membrane to at least one of the thrust surfaces of the joint, the membrane having a thickness of between 0.025 and 0.254 mm and being of a material which is readily pulverized by grinding; assembling the joint by exerting an axial compressive force sufficient to compressively load the membrane between the members, the loading on the membrane limiting the assembly; and grinding the membrane into fine particles upon initial pivotal movements of the joint after assembly and thus providing a controlled narrow interstice between the thrust surfaces sufficient to axial unlock the joint and allow substantially free pivotal movement of the joint thereafter.

With this method, upon the membrane being ground away during the initial pivotal movements of the track joint, a controlled narrow interstice is provided between the thrust surfaces so as to unlock the joint and allow substantially free pivotal movement thereof during further operation of the joint.

The invention also includes a track joint assembly, comprising a first membrane including a busing having a pair of outwardly facing thrust surfaces at the opposite ends thereof; a second member including a pin and first and second links, the pin being pivotably receivable through the bushing and having opposite end portions then extending outwardly from the opposite ends of the bushing, and the links being pressably receivable onto the opposite end portions of the pin, each link having an inwardly facing thrust surface disposed in an opposed relationship to a respective one of the thrust surfaces of the bushing; and annular spacer means interposable and in potentially abutting engagement against each of the opposing sets of thrust surfaces for limiting the inward axial movement of the links (as disclosed in US—A—3975028) characterised in that the spacer means includes a controlled interstice-producing membrane compressable between the spacer means and the thrust surfaces upon exertion of a compression assembly force on the links to press the links onto the end portions of the pin, the membrane being made of a material which is readily pulverizable by grinding during the initial pivotal movements of the joint, whereby the joint is relieved of any residual compressive load after pulverisation of the membrane.

In the accompanying drawings:—

Figure 1 is a cross-sectional view of a track chain joint embodying the principles of the present invention;

Figure 2 is a greatly enlarged fragmentary sectional view illustrating the interstice-producing membrane immediately after the assembly of the joint;

Figure 3 is a view similar to Figure 2, out after destruction of the membrane upon initial pivotal movement of the joint; and,

Figure 4 is an isometric view of a ring membrane illustrating one of the preferred constructions of the present invention.

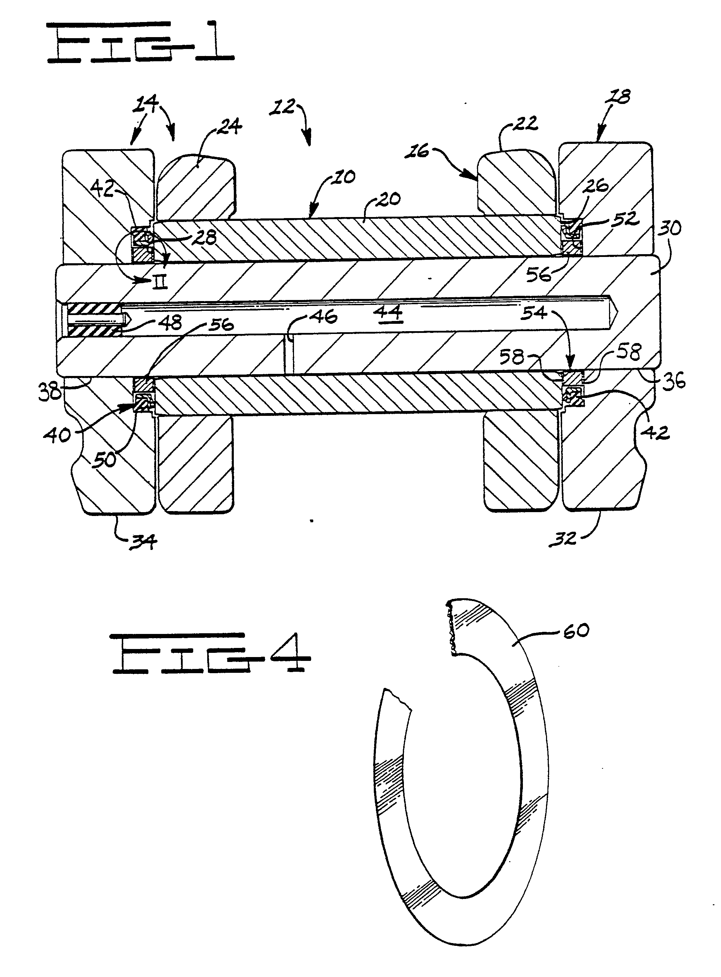

Referring more particularly to the drawings, a hinge of pivot joint 10 of an endless track chain 12 is depicted in cross-section in Figure 1. A pair of such chains 12 are used to support and propel a track-type vehicle (not shown) and are subjected to severe loads and adverse environment in such use. Each track chain 12 is constructed from a plurality of like link sections 14, each having its opposite ends pivotally joined by a like plurality of pivot joints 10 to a succeeding and preceding link section. In Figure 1, a bushing end 16 of one link section and a pin end 18 of another link section make up one of the pivot joints 10. Those skilled in the art will appreciate that each link section 14 has identical components. However, some of the same components in the adjoining sections shown in Figure 1 are given different numbers herein for the sake of clarity. Bushing end 16 includes a bushing 20, a right-hand link 22, and a left-hand link 24. The links and bushing are connected together into a unitary structure by each of the links 22 and 24 being pressed onto a respective one of the opposite end portions of the bushing 20. The bushing 20 has opposite end faces 26 and 28, each of which serves as a sealing and thrust surface, as will hereinafter be more fully described.

Each pin end 18, as shown in Figure 1, includes a pin 30, a right-hand link 32, and a left-hand link 34. Pin 30 is disposed through and pivotally mounted within the bushing 20. The opposite end portions 36, 38 of the pin 30 extend from the bushing 20 and are pressably mounted within the links 32, 34.

Means 40 for sealing and lubricating the joint 10 include a pair of seals 42 and a lubricant filled reservoir 44 in pin 30. A cross hole 46 communicates the reservoir 44 to the interface between the pin 30 and the bushing 20. The reservoir 44 is preferably closed by a plug 48.

Each seal 42 is disposed within an inwardly facing counterbore 50 provided in each of the links 32 and 34. Each counterbore 50 has a bottom wall 52 which is disposed in an opposing relationship to its respective bushing end face 26, 28. Each bottom wall 52, like end faces 26, 28, also serves as a thrust surface, as will hereinafter be described.

As further illustrated in Figure 1, joint 10 also includes thrust means 54 for transferring axial loads which are exerted on the chain 12 during use between adjourning link sections 14 which are exerted on the chain during its operational use. Thrust means 54 also functions as a positive stop for positioning the links 32, 34 as they are pressed onto the opposite end portions 36, 38, respectively, of the pin 30 during assembly of the track chain. In sealed and lubricated track, as shown herein, the thrust means 54 also control the axial compression of the seals 42 which control is necessary for the proper functioning of the seals. In such a sealed and lubricated joint, this is customarily accomplished by use of a pair of annular spacers or thrust rings 56. One of the thrust rings 56 is concentrically disposed within each of the seals 42. Each thrust ring 56 has a thrust surface 58 at each end thereof. One of such thrust surfaces 58 is disposed in an opposing relationship with a respective one of the thrust surfaces 52 of the counterbore 50 and the other is disposed in an opposing relationship to a respective one of the thrust surfaces 26, 28 of the bushing 20.

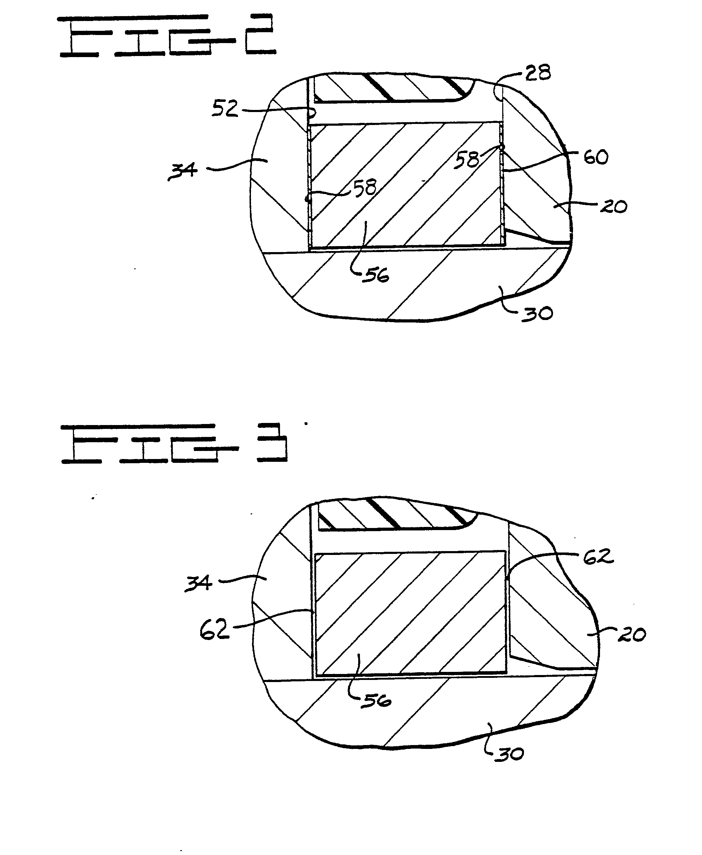

In the track joint according to the present invention, a controlled interstice producing membrane 60 is interposed each set of opposing thrust surfaces for releiving the joint 10 of any residual compressive loads which may become locked-up in the joint during the assembly process. As best shown in Figure 2, membrane 60 is preferably affixed to the thrust surfaces 58 of the thrust rings 56. Each membrane 60 is provided with a material thickness of between 0.025 to 0.254 mm (.001 to .010 inches). The use of a membrane with a thickness of greater than 0.254 mm (.010 inches) may create an undue amount of end play in the joint, as well as produce a sufficient amount of debris therein to prevent adequate access of lubricating oil to the seals. On the other hand, a membrane of a thickness less than 0.025 mm (.001 inches) is not sufficient to reliably unlock the joint. A membrane 60 with a material thickness of between 0.076 to 0.127 mm (.003 to .005 inches) has been found to be preferable, with a thickness of approximately 0.102 mm (.004 inches) having been used with satisfactory results.

It is also desirable that the membrane 60 be of a material which is readily pulverizable by grinding to facilitate its disintegration upon the initial pivotal movement of the joint after assembly. A material which is relatively weak in shear is, therefore, preferred. While the membrane 60 is subjected to high compressive loads, sometimes as high as $8.962 \times 10^8$ Pa (130,000 psi), it has been discovered that a material with a similarly high compression modulus is not likewise required. This is believed to be because the member 60 is so thin, particularly in comparison to its compressible area, that material is not extruded from between the thrust surfaces when compressed, as would occur if it were much thicker.

As shown in Figure 4, the membrane 60 is preferably in the form of a thin ring which is secured to each of the ends of the thrust rings by any suitable adhesive. In this form, a membrane made of a cellulose paper has been used with satisfactory results. The membrane 60 may also take the form of a thin coating covering the entire surface of the thrust ring. In this form, a coating of perfluoroalkoxy (PFA) has been used with satisfactory results. Such PFA coating may be applied to the thrust ring by any well-known process which provides sufficient adherence between the coating and the thrust ring and which produces a coating with a uniform thickness.

**Industrial applicability**

Track joint 10 is preferably assembled by means of a track press (not shown) of any conventional design. As is well-known in the track art, such track presses are very powerful hydraulic devices, normally with a 1.360 to $1.814 \times 10^5$ kg (150 to 200 ton) capacity. Some newer track presses, however, have a $2.720 \times 10^5$ kg (300 ton) capacity. Thus, it is readily apparent that large compressive forces are exerted on the components of the track joint 10 during the assembly process which preferably occurs in the following sequence. First, the left and right-hand links 22, 24 are pressably forced onto the opposite ends of the bushing 20 so as to form a unitary structure thereof. Second, the pin 30 is centrally placed within the bushing 20. A clearance fit is provided between the pin 30 and the bushing 20 to permit free pivotal movement therebetween. Third, the thrust ring 56 with the membranes 60 of the present invention attached thereto are placed about their respective pin end portions 36, 38 which protrude from the opposite ends of the bushing 20. A seal 42 is mounted within the counterbore 50 of the links 32, 34 prior to the links being positioned adjacent to their respective ends of the pin 30. By means of the track press, the links 32, 34 are forced onto their respective pin end portions 36, 38 until the joint becomes solid, e.g., there is no axial clearance between the links 32, 34, thrust rings 56, and bushing 20.

In practice, the press force applied to the links 32, 34 is much greater than the nominal force required to assemble such links onto the pin 30. The application of a greater than nominal force is required to insure proper assemblage of all joints, each of which may require a different assembly force due to variations in manufacturing tolerances and the like. For example, a particular joint may require a nominal assembly force of 60 tons, while an actual assembly force of 100 tons would be applied thereto to insure the complete assemblage of every link onto every pin 30 of a track chain.

The application of this amount of excessive force on the joint can and frequently does produce a compressive load which becomes locked into the joint after the assembly process is completed. Such a residual load, due to friction between the mating thrust surfaces of the joint, restricts the normal free pivotal movement of the joint. If of sufficient magnitude, such compressive loads can cause galling of the thrust surfaces and generate sufficient frictional heat to injure, and possibly melt, the synthetic plastic materials of the seals in certain areas. The interstice producing membrane 60 of the present invention advantageously eliminates this residual compressive load in the joint, thereby eliminating the deleterious consequences thereof. This is accomplished by the membrane 60 sacrificially self-destructing upon the initial pivotal movements of the joint after the joint is assembled. The membrane 60, in effect, is pulverized, preferably into fine particles, by being ground between the thrust surfaces during such initial pivotal movements. The fine particles are then removed from between the thrust surfaces by entering into solution with or by being flushed away by the lubricating oil. The disappearance of the membrane 60 between the mating thrust surfaces of the joint produces a controlled interstice or running clearance 62, as shown in Figure 3, between such thrust surfaces which is sufficient to unlock the joint and allow the free pivotal movement thereof. However, no significant looseness is produced in the joint upon the disappearance of the membrane 60 due to its minimally controlled thickness.

**Claims**

1. A method of providing a controlled running clearance between opposing thrust surfaces (26, 28; 52, 58) of a track joint (10), the joint (10) having a first member (16) pivotable relative to a second member (18) thereof, the method comprising the steps of applying a controlled interstice-producing membrane (60) to at least one of the thrust surfaces (26, 28; 52, 58) of the joint (10), the membrane (60) having a thickness of between 0.025 and 0.254 mm and being of a material which is readily pulverized by grinding; assembling the joint (10) by exerting an axial compressive force sufficient to compressively load the membrane (60) between the members (16, 18), the loading on the membrane limiting the assembly; and grinding the membrane (60) into fine particles upon initial pivotal movements of the joint (10) after assembly and thus providing a controlled narrow interstice (62) between the thrust surfaces (26, 28; 52, 58) sufficient to axial unlock the joint (10) and allow substantially free pivotal movement of the joint (10) thereafter.

2. A method according to Claim 1, wherein the membrane (60) has a thickness of between 0.076 and 0.127 mm.

3. A method according to Claim 1 or Claim 2, wherein the track joint (10) includes a thrust ring (56) defining one of the thrust surfaces (58) and wherein the step of providing a controlled interstice producing membrane (60) includes affixing the membrane (60) to the thrust ring (56) at least over the thrust surface (58) thereof.

4. A method according to Claim 3, wherein the step of affixing the membrane (60) to the thrust ring (56) includes applying a coating of perfluoroalkoxy to the thrust ring (56).

5. A method according to Claim 3, wherein the membrane (60) is a ring of paper of diametral size to cover the thrust surfaces (58).

6. A method according to any one of Claims 3 to 5, wherein the thrust ring (56) is concentric with a seal (42) and both are disposed between axially facing thrust surfaces (52; 26, 28), whereby the thrust ring and membrane (10) control the axial compression of the seal (42) during assembly of the joint.

7. A track joint assembly (10), comprising a first membrane (16) including a bushing (20) having a pair of outwardly facing thrust surfaces (26, 28) at the opposite ends thereof; a second member, (18) including a pin (30) and first and second links (32, 34), the pin (30) being pivotably receivable through the bushing (20) and having opposite end portions (36, 38) then extending outwardly from the opposite ends of the bushing (20), and the links (32, 34) being pressably receivable onto the opposite end portions (36, 38) of the pin (30), each link (32, 34) having an inwardly facing thrust surface (52) disposed in an opposed relationship to a respective one of the thrust surfaces (26, 28) of the bushing (20); and annular spacer means (56) interposable and in potentially abutting engagement against each of the opposing sets of thrust surfaces (26, 28; 52) for limiting the inward axial movement of the links (32, 34); characterised in that the spacer means (56) includes a controlled interstice-producing membrane compressable between the spacer means (56) and the thrust surfaces (26, 28; 52) upon exertion of a compression assembly force on the links (32, 38) to press the links onto the end portions of the pin, the membrane (60) being made of a material which is readily pulverizable by grinding during the initial pivotal movements of the joint (10), whereby the joint is relieved of any residual compressive load after pulverisation of the membrane.

8. A track joint assembly (10) according to Claim 7, wherein the spacer means (56) includes a thrust ring (56) having a thrust surface (58) at each end thereof, each of the thrust surfaces (58) having one of the membranes (60) affixed thereto.

9. A track joint assembly (10) according to Claim 7 or Claim 8, including lubricant means (40) and a seal (42) disposable between each of the links (32, 34) and a respective one of the bushing ends (26, 28) for sealing lubricant within the joint assembly (10).

10. A track joint assembly (10) according to any one of Claims 7 to 9, wherein the membrane (60) is provided by a thin coating of perfluoroalkoxy covering the thrust rings (56).

11. A track joint assembly (10) according to any one of Claims 7 to 9, wherein the membrane (60) is provided by a thin ring of paper affixed to each of the thrust surfaces (58) of the thrust rings (56).

12. A track joint assembly (10) according to any one of the Claims 6 to 10, wherein the spacer means (56) provides an interstice (62) within a range of from 0.025 to 0.254 mm upon the grinding away of the membrane (60).

**Patentansprüche**

1. Verfahren zum Vorsehen eines gesteuerten Laufzwischenraumes zwischen entgegengesetzt liegenden Schuboberflächen (26, 28; 52, 58) eines Kettengelenks (10), welches ein erstes Glied (16) aufweist, das bezüglich eines zweiten Glieds (18) verschwenkbar ist, wobei das Verfahren folgende Schritte aufweist:
Anlegen einer einen gesteuerten Zwischenraum erzeugenden Membrane (60) an mindestens eine der Schuboberflächen (26, 28;

52, 58) des Gelenks (10), wobei die Membran (60) eine Dicke von zwischen 0,025 und 0,254 mm besitzt und aus einem ohne weiteres durch Schleifen pulverisierbaren Material besteht; Zusammenbau des Gelenks (10) durch Ausüben einer axial zusammendrückend wirkenden Kraft ausreichend zur Kompressionsbelastung der Membran (60) zwischen den Gliedern (16, 18), wobei die Belastung an der Membran die anordnung begrenzt; und Schleifen der Membran (60) in feine Teilchen nach anfänglichen Schwenkbewegungen des Gelenks (10) nach dem Zusammenbau und auf diese Weise Erzeugung eines gesteuerten schmalen Zwischenraums (62) zwischen den Schuboberflächen (26, 28; 52, 58) ausreichend zur axialen Entriegelung des Gelenks (10) und zur Gestattung einer im wesentlichen freien Schwenkbewegung des Gelenks (10) danach.

2. Verfahren nach Anspruch 1, wobei die Membran (60) eine Dicke von zwischen 0,076 und 0,127 mm besitzt.

3. Verfahren nach Anspruch 1 oder 2 wobei das Kettengelenk (10) einen Schubring (56) aufweist, der eine der Schuboberflächen (58) definiert und wobei der Schritt des Vorsehens einer einen gesteuerten Zwischenraum erzeugenden Membran (60) das Befestigen der Membran (60) an dem Schubring (56) mindestens über die Schuboberfläche (58) hinweg umfaßt.

4. Verfahren nach Anspruch 3, wobei der Schritt des Befestigens der Membran (60) an dem Schubring (56) das Aufbringen eines Perfluoroalkoxyüberzugs am Schubring (56) umfaßt.

5. Verfahren nach Anspruch 3, wobei die Membran (60) ein Ring aus Papier ist mit einer Diametralgröße zur Abdeckung der Schuboberflächen (58).

6. Verfahren nach einem der Ansprüche 3 bis 5, wobei der Schubring (56) konzentrisch mit einer Dichtung (42) ausgebildet ist und beide zwischen axial aufeinander zuweisende Schuboberflächen (52; 26, 28) angeordnet sind, wodurch Schubring und Membran (10) die Axialkompression der Dichtung (42) während des Zusammenbaus des Gelenks steuern.

7. Kettengelenkanordnung (10), die folgendes aufweist:
ein erstes Glied (16) mit einer Büchse (20) mit einem Paar von nach außen weisenden Schuboberflächen (26, 28) an entgegengesetzt liegenden Enden derselben;
ein zweites Glied (18) mit einem Stift (30) und ersten und zweiten Verbindungen (32, 34), wobei der Stift (30) schwenkbar durch die Büchse (20) aufnehmbar ist und entgegengesetzt liegende Endteile (36, 38) aufweist, die sich sodann nach außen von den entgegengesetzten Enden der Büchse (20) erstrecken, und wobei die Verbindungen (32, 34) preßbar auf entgegengesetzten Endteilen (36, 38) des Stifts (30) aufnehmbar sind, wobei jede Verbindung (32, 34) eine nach innen weisende Schuboberfläche (52) aufweist, und zwar angeordnet in einer entgegengesetzt liegenden Beziehung bezüglich einer entsprechenden der Schuboberflächen (26, 28) der Büchse (20); und

ringförmige Abstandsmittel (56) einsetzbar und in potentiell anstoßendem Eingriff gegen jeden der entgegengestzt liegenden Sätze von Schuboberflächen (26, 28; 52) zur Begrenzung der nach innen gerichteten Axialbewegung der Verbindungen (32, 34); dadurch gekennzeichnet, daß die Abstandsmittel (56) eine einen gesteuerten Zwischenraum erzeugende Membran aufweisen, die zwischen den Abstandsmitteln (56) und den Schuboberflächen (26, 28; 52) zusammendrückbar ist, und zwar beim Ausüben einer Kompressionszusammenbaukraft auf die Verbindungen (32, 38) um die Verbindungen auf die Endteile des Stiftes zu drücken, wobei die Membran (60) aus einem Material hergestellt ist, welches ohne weiteres durch Schleifen während der anfänglichen Schwenkbewegungen des Gelenks (10) pulverisierbar ist, wodurch das Gelenk nach Pulverisierung der Membran gegenüber jedweder restlicher Kompressionsbelastung freigesetzt ist.

8. Kettengelenkanordnung (10) nach Anspruch 7, wobei die Abstandsmittel (56) einen Schubring (56) aufweisen mit einer Schuboberfläche (58) an jedem Ende desselben, und wobei jede der Schuboberflächen (58) eine der Membranen (60) daran befestigt aufweist.

9. Kettengelenkanordnung (10) nach Anspruch 7 oder 8 mit Schmiermitteln (40) und einer Dichtung (42) anordenbar zwischen jeder der Verbindungen (32, 34) und einem entsprechenden Ende der Büchsenenden (26, 28) zur Abdichtung von Schmiermitteln innerhalb der Gelenkanordnung (10).

10. Kettengelenkanordnung (10) nach einem der Ansprüche 7 bis 9, wobei die Membran (60) mit einem dünnen Perfluoroalkoxyüberzug ausgestattet ist, der die Schubringe (56) überdeckt.

11. Kettengelenkanordnung (10) nach einem der Ansprüche 7 bis 9, wobei die Membran (60) durch einen dünnen Ring aus Papier vorgesehen wird, und zwar befestigt an jeder der Schuboberflächen (58) der Schubringe (56).

12. Kettengelenkanordnung (10) nach einem der Ansprüche 6 bis 10, wobei die Abstandsmittel (56) einen Zwischenraum (62) innerhalb eines Bereichs von 0,025 bis 0,254 mm nach Wegschleifen der Membran (60) vorsehen.

**Revendicatons**

1. Procédé pour produire un jeu de fonctionnement contrôlé entre des surfaces de butée opposées (26, 28; 52, 58) d'une articulation (10) de chemin de roulement, l'articulation (10) comportant un premier élément (16) pouvant pivoter par rapport à un second élément (18) de l'articulation, ce procéde incluant les étapes consistant à appliquer une membrane (60) définissant un interstice contrôlé, sur au moins l'une des surfaces de butée (26, 28; 52, 58) de l'articulation (10), la membrane (60) possédant une épaisseur comprise entre 0,025 et 0,254 mm et étant réalisée en un matériau qui est aisément pulvérisé par meulage; à assembler l'articulation (10) en exerçant une force de compression axiale suffisante pour charger par compression la membrane (60) située entre les éléments (16, 18), la charge appliquée à la membrane limitant l'assemblage; et à meuler la membrane (60) sous la forme de fines particules lors de mouvements initiaux de pivotement de l'articulation (10) après assemblage et à obtenir ainsi entre les surfaces de butée (26, 28; 52, 58) un faible interstice contrôlé (62) suffisant pour débloquer axialement l'articulation (10) et permettre ensuite un mouvement de pivotement sensiblement libre de l'articulation (10).

2. Procédé selon la revendication 1, dans lequel la membrane (60) possède une épaisseur comprise entre 0,076 et 0,127 mm.

3. Procédé selon la revendication 1 ou 2, dans lequel l'articulation (10) de chemin de roulement comporte une bague de butée (56) définissant l'une des surfaces de butée (58), et dans lequel l'étape consistant à prévoir une membrane (60) produisant un interstice contrôlé inclut la fixation de la membrane (60) sur la bage de butée (56), au moins sur la surface de butée (58) de celle-ci.

4. Procédé selon la revendication 3, dans lequel l'étape consistant à fixer la membrane (60) sur la bague de butée (56) inclut l'application d'un revêtement de perfluoroalkoxy sur la bague de butée (56).

5. Procédé selon la revendication 3, dans lequel la membrane (60) est une bague en papier possédant des dimensions diamétrales pour recouvrir les surfaces de butée (58).

6. Procédé selon l'une quelconque des revendications 3 à 5, dans lequel la bague de butée (56) est concentrique avec un joint d'étanchéité (42) et ces deux éléments sont disposés entre des surfaces de butée (52; 26, 28) se faisant face axialement, la bague de butée de la membrane (10) réglant ainsi la compression axiale du joint d'échanchéité (42) pendant l'assemblage de l'articulation.

7. Ensemble d'articulation de chemin de roulement (10), comportant un premier élément (16) comprenant un manchon (20) possédant, sur ses extrémités opposées, un couple de surfaces de butée (26, 28) tournées vers l'extérieur; un second élément (18) comprenant un axe (30) et des premier et second maillons (32, 34) l'axe (30) pouvant être logé à pivotement dans le manchon (20) et possédant des parties d'extrémités opposées (36, 38) s'étendant vers l'extérieur à partir des extrémités opposées du manchon (20), et les maillons (32, 34) pouvant être logés par emmanchement à la presse sur les parties d'extrémité opposées (36, 38) de l'axe (30), chaque maillon (32, 34) possédant une surface de butée (52) tournée vers l'intérieur et disposée en vis-à-vis de l'une respective des surfaces de butée (26, 28) du manchon (20); et des moyens formant entretoise annulaire (56) pouvant être intercalés et placés potentiellement en aboutement contre chacun des ensembles opposés de surfaces de butée (26, 28; 52) afin de limiter le déplacement axial vers l'intérieur des maillons (32, 34); caractérisé en ce que les moyens formant entretoise (56) comprennent une membrane définissant un interstice contrôlé, pouvant être comprimée entre les moyens formant entretoise (56) et les surfaces de butée (26, 28; 52) lors de l'application d'une force d'assemblage par compression sur les maillons (32, 38) afin de pressser ces derniers sur les parties d'extrémité de l'axe, la membrane (60) étant réalisée en un matériau qui peut être aisément pulvérisé par meulage pendant les mouvements de pivotement initiaux de l'articulation (10), cette articulation étant ainsi libérée de toute charge résiduelle de compression après pulvérisation de la membrane.

8. Ensemble d'articulation de chemin de roulement (10) selon la revendication 7, dans lequel les moyens formant entretoise (56) comprennent une bague de butée (56) possédant une surface de butée (58) au niveau de chacune de ses extrémités, l'une des membranes (60) étant fixée à chacune des surfaces de poussée (58).

9. Ensemble d'articulation de chemin de roulement (10) selon la revendication 7 ou 8, incluant des moyens de lubrification (40) et un joint d'étanchéité (42) pouvant être disposé entre chacun des maillons (32, 34) et l'une respective des extrémités (26, 28) du manchon afin de retenir de façon étanche le lubrifiant à l'intérieur de l'ensemble d'articulation (10).

10. Ensemble d'articulation de chemin de roulement (10) selon l'une quelconque des revendications 7 à 9, dans lequel la membrane (60) comporte un mince revêtement de perfluoroalkoxy recouvrant les bagues de butée (56).

11. Ensemble d'articulation de chemin de roulement (10) selon l'une quelconque des revendications 7 à 9, dans lequel la membrane (60) comporte une bague mince en papier fixée sur chacune des surfaces de butée (58) des bagues de butée (56).

12. Ensemble d'articulation de chemin de roulement (10) selon l'une quelconque des revendications 6 à 10, dans lequel les moyens formant entretoise (56) définissent un interstice (62) dans une gamme allant de 0,025 à 0,254 mm lors de l'élimination par meulage de la membrane (60).

FIG-1

FIG-4

0 186 685

# FIG-2

# FIG-3